# EUROPEAN PATENT SPECIFICATION

(11) **EP 4 101 623 B1**
(45) Date of publication and mention of the grant of the patent: **18.10.2023**
(21) Application number: 22173433.8
(22) Date of filing: 16.05.2022
(51) Int. Cl.: B29C 65/00, B29C 33/00, B29C 65/02, B29D 22/00, B29C 51/10, B29C 65/18, B29C 65/30, B29L 31/00, B31B 50/00, B29C 51/08

(54) **WELDING MOULD FOR WELDING A REINFORCING ELEMENT ONTO A FOOD CONTAINER**
SCHWEISSWERKZEUG ZUM VERSCHWEISSEN EINES VERSTÄRKUNGSELEMENTES AUF EINEM LEBENSMITTELBEHÄLTER
MOULE DE SOUDAGE D'UN ÉLÉMENT DE RENFORT SUR UN RÉCIPIENT ALIMENTAIRE

(30) Priority: 01.06.2021 IT 202100014300
(43) Date of publication of application: 14.12.2022
(73) Proprietor: Ipack S.r.l., 47025 Mercato Saraceno (FC) (IT)
(72) Inventor: SARAGONI, Luca, I-47521 Cesena (FC) (IT); RAVEGNINI, Stefano, I-47025 Mercato Saraceno (FC) (IT)
(74) Representative: Balsamo, Andrea

(56) References cited:
- AU-B2- 2017 364 912
- ES-U- 1 261 579
- US-A1- 2007 262 487

## Description

The present invention relates to the sector of welding preformed parts and has been developed with particular regard to a welding mould for welding a reinforcing element onto a food container.

In the sector relating to the packaging of food products widespread use is made of containers and/or trays for containing and preserving ready-prepared cooked dishes or basic foodstuffs such as meat, fish, fruit or vegetables. These containers are particularly practical and useful since they preserve predefined - already weighed and priced - quantities of food products which can be easily consumed by the end user.

The containers which are made by means of different industrial processes, in particular injection-moulding in the case of plastic containers or pressure thermoforming in the case of paper containers, must often be finished with the application of further plastic or paper parts.

These further parts may comprise, for example, linings for the internal surface of the container or plastic linings for the protection of the paper material with which the container is made, or elements for reinforcing parts of the container, such as joints, corners or edges, or also elements used to provide information regarding use of the container.

US 2007/262487 discloses an injection-molded composite container including a group of panels that is supported by a frame. The group of panels can be arranged in a predetermined configuration, so that the group of panels extends at least partially around, and at least partially defines, at least one cavity of the container. The frame can be mounted to at least portions of some of the panels, so that the frame holds the group of panels in the predetermined configuration.

Numerous tests carried out by the Applicant have shown how the specific geometrical configurations of the parts of the container to be reinforced make it difficult to perform the correct and complete application of the reinforcing elements. The need has therefore arisen to prevent a beaded or "corrugated" surface, an undercut or an interspace from hindering the correct alignment of the reinforcing element on the edge surface of the container.

The general object of the present invention is therefore that of finding a solution to this need. Further characteristic features and advantages of the present invention will become clearer from the description given below.

In view of this object the Applicant has thought to provide, according to the invention, a welding mould for welding a reinforcing element onto a food container, comprising:
- a female mould assembly in turn comprising:
- a female forming element comprising a pair of side walls, a front wall and a rear wall;
- a reinforcing element guide comprising one or more openings delimited by a perimetral wall and an internal wall and arranged on the outside of the walls of the female forming element;
- a male mould assembly in turn comprising:
   -- a forming plate;
   -- a paper-pressing ring comprising a pair of side walls, a front wall and a rear wall;
   -- a reinforcing element outer bending ring;
characterized in that the reinforcing element guide is arranged selectively movable with respect to the walls of the female forming element.

Reference will now be made in detail to the various embodiments of the invention, one or more examples of which are shown in the attached figures, in which:

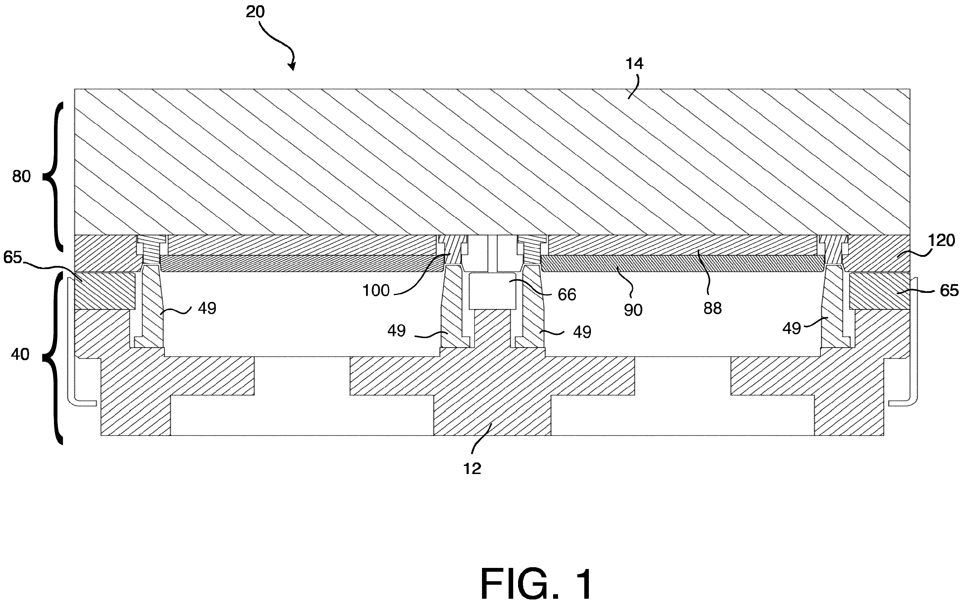

- Figure 1a is a cross-sectioned view of a first embodiment of the mould according to the present invention in an operating position thereof;
- Figure 2a is a schematic view of a reinforcing element guide according to the present invention;
- Figure 2b is an axonometric schematic view of a pair of the female mould assembly according to the present invention;

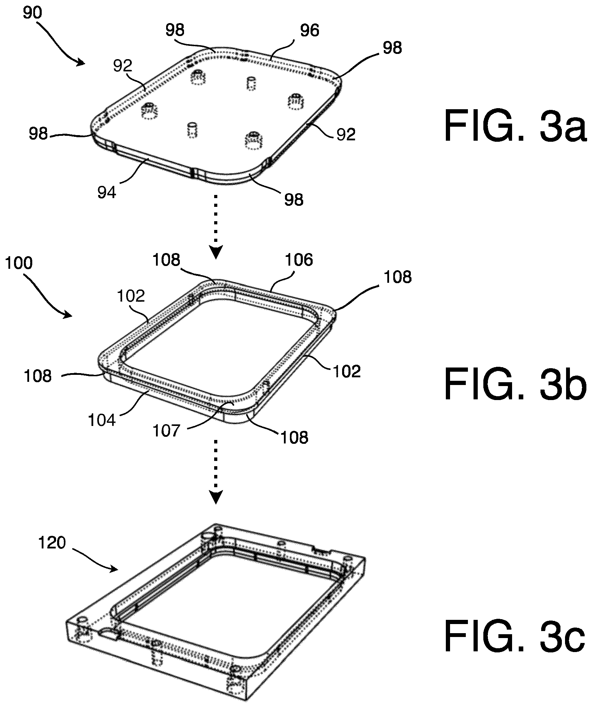

- Figures 3a to 3c are axonometric schematic views of parts of the male mould assembly according to the present invention;
- Figure 4 is a simplified detailed view of the mould in a first operating position; and
- Figure 5 is a simplified detailed view of the mould in a second operating position;
- Figure 6 is a cross-sectioned view of a second embodiment of the mould according to the present invention in an operating position thereof; and

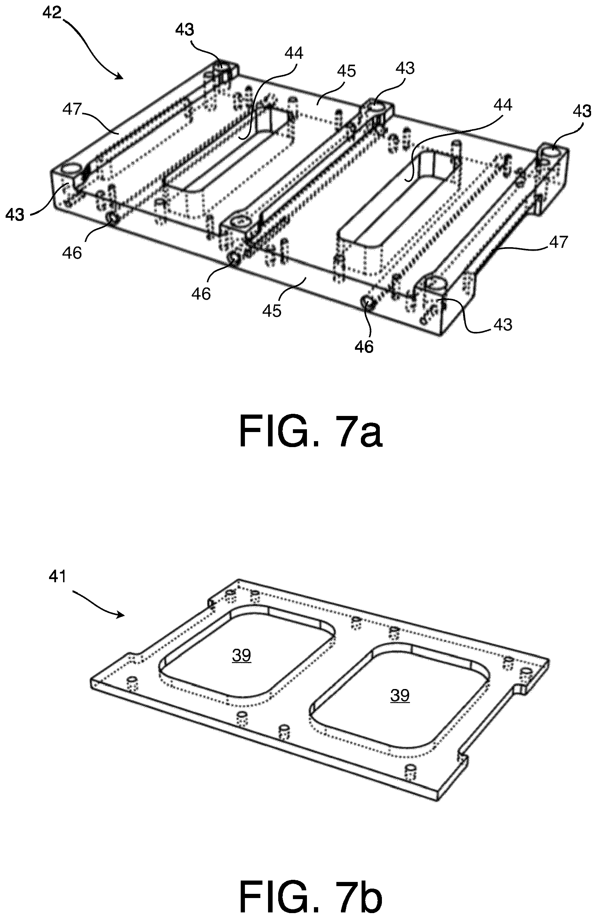

- Figures 7a and 7b are axonometric schematic views of parts of the female mould assembly according to an embodiment of the present invention.

In order to facilitate understanding, identical reference numbers have been used, where possible, to identify identical common elements in the figures. It is understood that elements or characteristics of one embodiment may be conveniently incorporated in other embodiments without further clarifications.

Each example is provided merely by way of illustration of the invention and is understood as not being a limitation thereof. For example, the technical characteristics shown or described since they form part of an embodiment may be integrated within, or associated with, other embodiments in order to produce a further embodiment. It is understood that the present invention will be inclusive of these modifications and variants.

It is understood that elements or characteristics of one embodiment may be conveniently incorporated in other embodiments without further clarifications.

A moulding station comprises a press, known per se and therefore not described or illustrated in further detail, and a welding mould, generally indicated by the number 20. The welding mould 20 may comprise a die assembly 40, or female mould assembly, and a punch assembly 80, or male mould assembly, which are arranged in respective different pressing planes of the press.

In a first embodiment of the present invention, the female mould assembly 40 comprises a female support plate 12 having a substantially rectangular shape in plan view, with two pairs of matching opposite sides and two sides longer than the other two sides.

The female mould assembly 40 further comprises one or more female forming elements 48 arranged superimposed and directly engaged with the female support plate 12. Each female forming element 48 comprises a pair of side walls 49, a front wall 50 and a rear wall 51 which are perpendicular and define internally a space which is particularly suitable for receiving, during use, a food container. Each female forming element 48 comprises a pair of flanges 52, which are formed respectively along the front wall 50 and the rear wall 51 and are particularly suitable for allowing the female forming element 48 to be fixed to the female support plate 12.

As a result of this solution, the female support plate 12 is an element, separate from the female forming element 48, which may therefore be easily replaced.

The welding mould 20 also comprises an element 60 for guiding the reinforcing element, which is particularly suitable during use for aligning with each other a food container and a reinforcing element. The reinforcing element guide 60 has a substantially rectangular shape with two pairs of matching opposite walls and with two perimetral walls 64 which are longer than the other two perimetral walls 65 and comprises one or more openings 62, each delimited by the perimetral walls 64, 65 and by an internal wall 66.

Each opening 62 is delimited by the perimetral walls 64, 65 and by the internal wall 66 which define an internal edge extending seamlessly so as to form an inner edge surface 69.

According to one of the possible embodiments of the present invention, an upper portion of the inner edge surface 69 is inclined.

The reinforcing element guide 60 is arranged superimposed on the female support plate 12 and in such a way that at least an upper portion of the walls 49, 50, 51 of each female forming element 48 is arranged inside one of the openings 62.

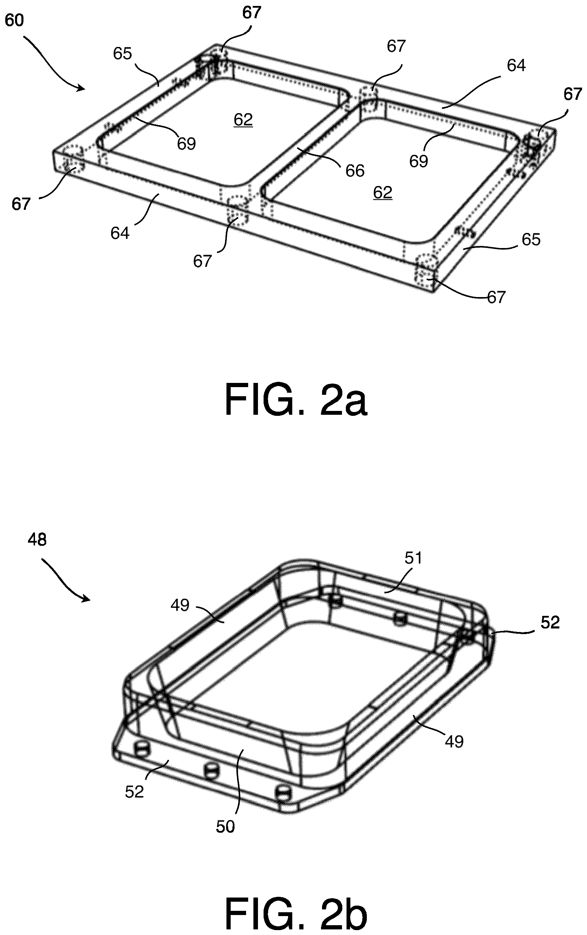

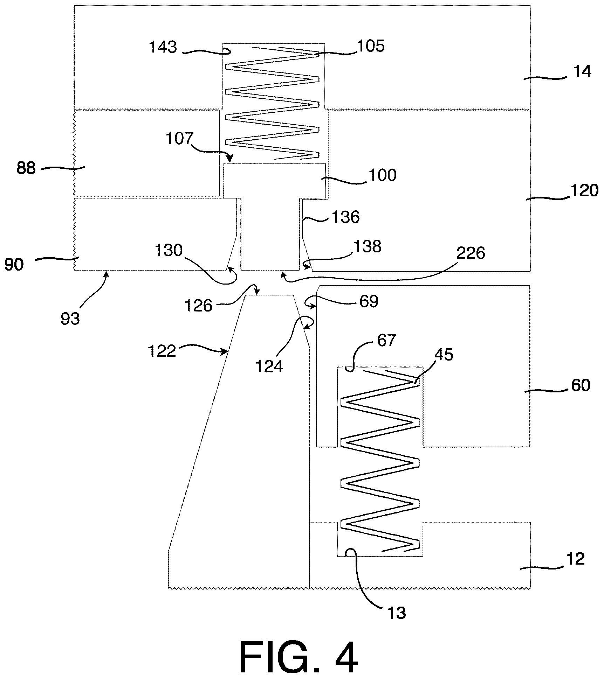

As shown more clearly in the embodiment of Figures 2 and 4, the upper portion of the female support plate 12 comprises at least a first seat 13, and a lower portion of the reinforcing element guide 60 comprises at least a second seat 67. Preferably, but not exclusively, the female support plate 12 comprises six first seats 13, four of which are formed in the corner portions and two of which are formed in the central portion of the two long edges of the female support plate 12.

Similarly, the reinforcing element guide 60 comprises, preferably, but not exclusively, six second seats 67, four of which are formed in the corner portions, and two of which are formed on the long perimetral walls 64 opposite the central wall 66 of the reinforcing element guide 60.

Obviously, it is possible to envisage a number of seats and positions of the seats different from that shown without thereby departing from the scope of the present invention.

All the first seats 13 and the second seats 67 are arranged so as to be axially aligned in pairs when the reinforcing element guide 60 is arranged superimposed on the female support plate 12.

A first resilient element 45, for example, but not exclusively, a spring, is inserted inside the first seat 13 and the second seat 67. As will become clearer below, and as shown in Fig. 4, the spring 45 allows the reinforcing element guide 60 to remain detached from the female support plate 12 and in such a way that the inner edge surface 69 is located in proximity to the upper portion of the walls 49, 50, 51 of each female forming element 48, when the welding mould 20 is located in a first operating position.

According to an embodiment shown in Figure 4, in said first operating position, the reinforcing element guide 60 is arranged vertically higher than the female forming element 48, namely further away from the female support plate 12 and closer to the male mould assembly 80 than the female forming element 48.

According to a second embodiment of the present invention, the male mould assembly 80 comprises a male support plate 14 having a substantially rectangular shape in plan view, with two pairs of matching opposite sides and two sides longer than the other two sides.

The male mould assembly 80 further comprises one or more forming plates 90, each fixed to a spacer 88 which is in turn engaged with the male support plate 14. Each forming plate 90 has a shape and size corresponding to an internal perimeter of the food container. The forming plate 90, or end plate, comprises a perimetral edge which includes a pair of side edges 92, a front edge 94 and a rear edge 96. Each side edge 92 is connected to the front edge 94 and to the rear edge 96 by means of a curvilinear edge wall 98.

The male mould assembly 80 further comprises an outer ring 120 for bending the reinforcing element, which is engaged with the male support plate 14.

The male mould assembly 80 comprises, finally, one or more paper-pressing rings 100 each comprising a pair of side walls 102, a front wall 104 and a rear wall 106. Each side wall 102 is connected to the front wall 104 and to the rear wall 106 by means of a curvilinear edge wall 108. The paper-pressing ring 100 is inserted inside the reinforcing element outer bending ring 120, the spacer 88 and the forming plate 90.

An upper portion of the walls 102, 104, 106 of the paper-pressing ring 100 define at the top an edge extending seamlessly to form an upper flat surface 107.

Preferably, but not exclusively, the male support plate 14 comprises a plurality of seats 143. For example, but not exclusively, the male support plate 82 comprises four seats 143 formed on the perimetral portion thereof and arranged so as to be axially aligned with the upper flat surface 107 of the paper-pressing ring 100 when the male support plate 14 is arranged superimposed on the paper-pressing element 100.

Obviously, it is possible to envisage a number of seats 143 and positions of the seats different from that described without thereby departing from the scope of the present invention.

A second resilient element 105, for example, but not exclusively, a spring, is inserted inside each of the seats 143 formed in the male support plate 14. As will become clearer below, the spring 105 allows the paper-pressing ring 100 to exert a pressure on the upper portion 126 of the walls 49 of the female forming element 48, when the male mould 80 is lowered onto the female mould 40.

As shown more clearly in Fig. 4, the side walls 102, the front wall 104 and the rear wall 106 of the paper-pressing rings 100 define at the bottom an edge extending seamlessly to form a lower flat surface 226.

Upper portions of the walls 40, 50, 51 of the female forming element 48 define an edge extending seamlessly to form an upper flat surface 126 which is particularly suitable, during use, for making pressing contact against the lower flat surface 226 of the paper-pressing ring 100. The upper portion of the walls 49, 50, 51 of the female forming element 48 further comprise an inner wall 122 and an outer wall 124, which are both inclined with respect to the plane defined by the upper surface 126.

At least one portion 130 of the edges 92, 94, 96, 98 of the second forming plate 90 may be inclined with respect to a bottom wall 93 of the second forming plate 90.

The reinforcing element outer bending ring 120 comprises a projecting inner edge 132 which is defined by a horizontal wall 134 and a vertical wall 136. At least one portion of said vertical wall 136 comprises an inclined surface 138 as shown in Fig. 4 As clearly visible in Figure 4, the inclination of the portion 130 of the second forming plate 90 corresponds to the inclination of the inner wall 122 of the walls 49, 50, 51 of the female forming element 48, and the inclination of the inclined surface 138 of the reinforcing element outer bending ring 120 corresponds to the inclination of the outer wall 124 of the walls 49, 50, 51 of the female forming element 48.

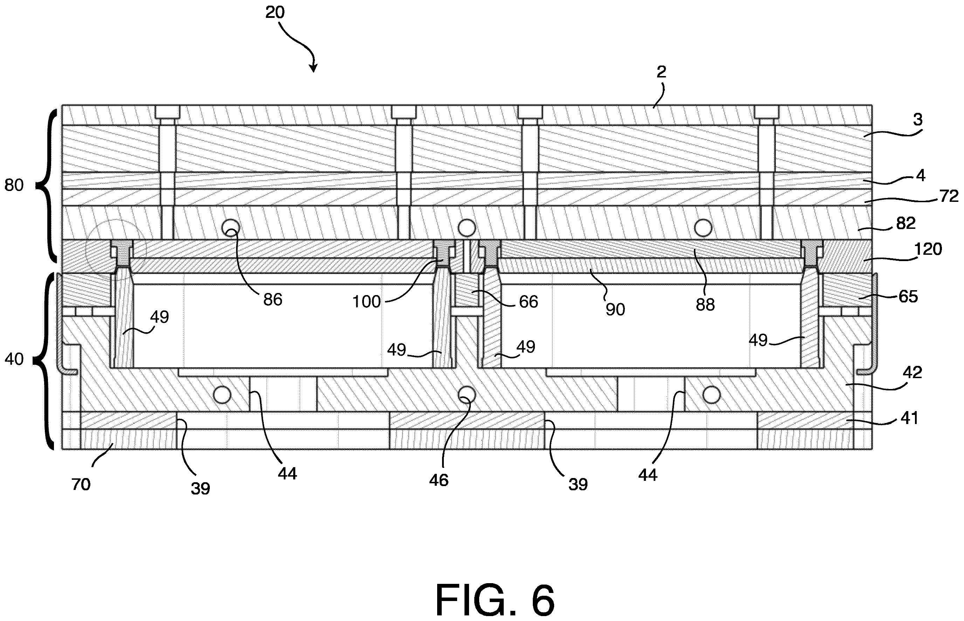

In a further embodiment of the present invention, shown in Figure 6, the female support plate 12 may comprise, for example, a base plate 70, a female insulating plate 41 and a female heating plate 42.

The female insulating plate 41, which has a substantially rectangular shape in plan view and comprises one or more openings 39, is fixed to the base plate 70.

The female heating plate 42, which has a substantially rectangular shape in plan view, with two long edges 45 and two short edges 47, is engaged on the female insulating plate 41. One or more elongated openings 44 are formed in the female heating plate 42.

The female heating plate 42 also has, formed therein, a plurality of ducts 46, for example three ducts, inside each of which a heating element, for example a heating rod with a power of between, for example, but not exclusively 400 and 800 W, may be arranged.

The female mould assembly 40, similar to that shown in Figure 2b, further comprises one or more female forming elements 48 arranged superimposed on the female heating element 42 and each comprising a pair of side walls 49, a front wall 50 and a rear wall 51 which are perpendicular and define internally a space particularly suitable for receiving, during use, a food container. Each female forming element 48 comprises a pair of flanges 52, which are formed respectively along the front wall 50 and the rear wall 51 and are particularly suitable for allowing the female forming element 48 to be fixed to the female heating plate 42.

As a result of this solution, the female heating plate 42 is an element, separate from the female forming element 48, which may therefore be easily replaced.

The welding mould 20 also comprises an element 60 for guiding the reinforcing element, which is particularly suitable, during use, for aligning with each other a food container and reinforcing element.

The reinforcing element guide 60 of this further embodiment, similar to that shown in Figure 2a, comprises all the characteristics which were described above for the first embodiment and which are incorporated in this embodiment, but will not be described again for the sake of brevity.

According to this further embodiment of the present invention, the upper portion of the female heating plate 42 comprises at least a first seat 43, similar to the seats 13 formed in the female support plate 12 of the first embodiment. Preferably, but not exclusively, the female heating plate 42 comprises six first seats 43, four of which are formed in the corner portions and two of which are formed in the central portion of the two long edges 45 of the female heating plate 42.

Obviously, it is possible to envisage a number of seats and positions of the seats different from that shown without thereby departing from the scope of the present invention.

All the first seats 43 formed in the female heating plate 42 and the second seats 67 formed in the reinforcing element guide 60 are arranged so as to be axially aligned in pairs when the reinforcing element guide 60 is arranged superimposed on the female heating plate 42.

A first resilient element 45, for example, but not exclusively, a spring, is inserted inside the first seat 43 and the second seat 67. As will become clearer below, the spring 45 allows the reinforcing element guide 60 to remain detached from the female heating plate 42 and close to the upper portion of the walls 49, 50, 51 of each female forming element 48, when the welding mould 20 is located in a first operating position.

According to this further embodiment also, similar to that shown in Figure 4, in said first operating position, the reinforcing element guide 60 is arranged vertically higher than the female forming element 48, namely further away from the female heating plate 42 and closer to the male mould assembly 80 than the female forming element 48. According to this embodiment, the male support plate 14 may comprise, for example, an upper support plate 2, a spacer plate 3, a lower support plate 4, an insulating plate 72 and a male heating plate 82 arranged superimposed and engaged with each other. All the plates 2, 3, 4, 72 have a substantially rectangular shape in plan view, with two pairs of matching opposite sides, and with two sides longer than the other two sides.

The male heating plate 82 also has, formed therein, a plurality of ducts 86, for example three ducts, inside each of which a heating element, for example a heating rod with a power of between, for example, but not exclusively, 400 and 800 W, is arranged.

The male mould assembly 80 further comprises one or more forming plates 90, each fixed to a spacer 88 which is in turn engaged with the male heating plate 82. Each forming plate 90 has a shape and size corresponding to an upper perimeter of the food container.

The male mould assembly 80 further comprises on or more outer rings 120 for bending the reinforcing element, which is/are engaged on the male heating plate 82. The male mould assembly 80 comprises, finally, one or more paper-pressing rings 100 each comprising a pair of side walls 102, a front wall 104 and a rear wall 106. The forming plates 90, the reinforcing element outer bending rings 120 and the paper-pressing ring 100 of this embodiment all comprise the characteristics which were described above for the first embodiment and which are therefore incorporated in this embodiment, but will not be described again for the sake of brevity.

An upper portion of the walls 102, 104, 106 of the paper-pressing ring 100 define at the top an edge extending seamlessly so as to form an upper flat surface 107.

Preferably, but not exclusively, the male heating plate 82 comprises a plurality of seats, similar to that described above for the male support plate 14. For example, but not exclusively, the male heating plate 82 comprises four seats formed on the perimetral portion thereof and arranged so as to be axially aligned with the upper flat surface 107 of the paper-pressing ring 100 when the male heating plate 14 is arranged superimposed on the paper-pressing element 100.

Obviously, it is possible to envisage a number of seats and positions of the seats different from that shown without thereby departing from the scope of the present invention.

A second resilient element 105, for example, but not exclusively, a spring, is inserted inside each of the seats of the heating plate 82. As will become clearer below, the spring 105 allows the paper-pressing ring 100 to exert a pressure on the upper portion of the walls 49 of the female forming element 48, when the male mould 80 is lowered onto the female mould 40.

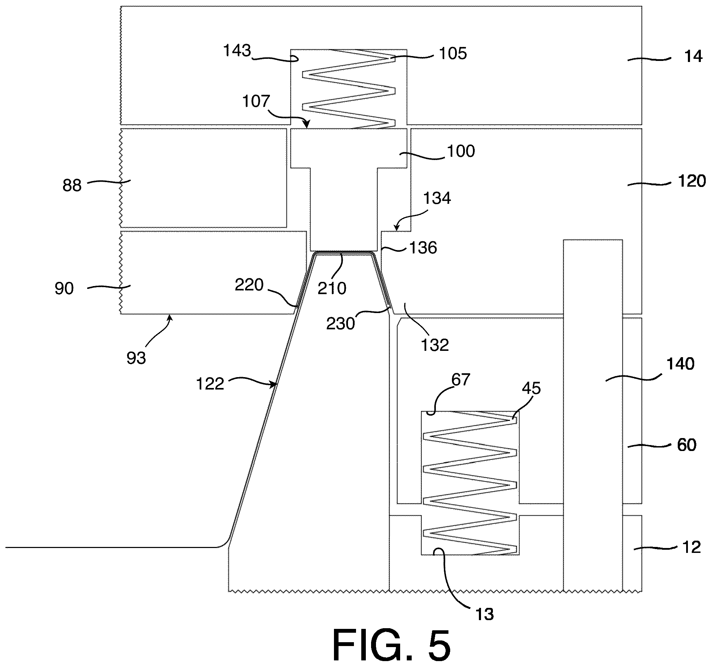

According to a further, particularly advantageous, characteristic feature of the present invention shown in Fig. 5, but belonging to all the embodiments described here, the welding mould 20 comprises one or more aligning elements, designed to keep aligned with each other, the female heating plate 42 or the female support plate 12, the reinforcing element guide 60 and the reinforcing element outer bending ring 120 when they are arranged on top of each other. For example, the welding mould 20 comprises one or more posts 140 which are inserted inside respective openings formed in perimetral portions of the female heating plate 42 or female support plate 12, of the reinforcing element guide 650 and of the reinforcing element outer bending ring 120.

The mould of the present invention is used to associate a reinforcing element, for example a reinforcing ring, with a food container so as to re-form the upper edge of the said container.

As will be clear to a person skilled in the art, the description of the process below may be equally well applied to all the embodiments described hitherto.

During use, a food container is arranged inside a female forming element 48 and a reinforcing element is arranged on the edge of the said container, so that a central portion 210 of the reinforcing element rests on the upper flat surface 126 of the walls 49, 50, 51 of the female forming element 48, and an outer portion 230 of the reinforcing element is retained by means of containment by the inner edge surface 69 of the reinforcing guide element 60.

Then, the male mould assembly 80 is lowered towards the female mould assembly 40 so that the paper-pressing ring 100 makes pressing contact against the central portion 210 of the reinforcing element. The reinforcing element is thus clamped between the paper-pressing ring 100, the edge of the container and the upper flat surface 126 of the walls 49, 50, 51 of the female forming element 48.

Then, the male mould assembly 80 is further lowered so that the second forming plate 90 is inserted inside the container, while the reinforcing element bending ring 120 slides on the outside of the side wall 49 of the female forming element 48, lowering the reinforcing element guide 60 towards the female support plate 12 or the heating plate 42 and overcoming the force exerted by the spring 45.

The paper-pressing ring 100, pressing against the edge 49 of the female forming element 48, slides inside the seat 143 of the male support plate or the heating plate, and, being acted on by the spring 105, continues to exert a pressure on the central portion 210 of the reinforcing element, and to keep the central portion 210 of the reinforcing element pressed against the edge of the container and the upper flat surface 126 of the female forming element 48.

At the same time, the inclined portion 130 of the edges 92, 94, 96, 98 of the second forming plate 90 bends the inner portion 220 of the reinforcing element against an inner proximal portion of the edge of the container, favouring adhesion thereof, and the inclined surface 138 of the reinforcing element outer bending ring 120 compresses the outer portion 230 of the reinforcing element against the inclined outer wall 124 of the walls 49, 50, 51 of the female forming element 48.

Once the reinforcing element has been joined together with the edge of the food container, the male moulding assembly 80 is raised, the container is extracted from the female mould assembly 40, and a new cycle may be started.

The technical solution of the present invention proves to be particularly advantageous for allowing joining together of the reinforcing element with the edge of a container since it allows the reinforcing element to be keep constantly fixed in position and aligned with the container edge.

During a first operating stage, when the reinforcing element is inserted inside the welding mould 20, the edge portion 230 of the reinforcing element is kept fixed by means of containment against the upper surface 126 of the female forming element 48 by means of the wall of the reinforcing element guide 60. Thereafter, when the male mould assembly 80 is further lowered, it is the paper-pressing ring 100 which keeps the central portion of the reinforcing element fixed by means of the friction against the edge of the container and the upper flat surface 126 of the female forming element 48.

Otherwise, the lateral components of the pressure forces exerted by the male mould assembly 80 and due to the inclined inner surfaces of the container, would tend to displace laterally the reinforcing element and would result in misalignment thereof on the edge of the container.

## Claims

1. A welding mould for welding a reinforcing element onto a food container, comprising:
- a female mould assembly (40) comprising at least one female forming element (48) having a pair of side walls (49), a front wall (50) and a rear wall (51),
- a reinforcement element guide (60), comprising one or more openings (62) delimited by a perimetral wall (64) and an internal wall (66),
the at least one female forming element (48) being arranged inside said opening (62) of the reinforcing element guide (60),
- a male mould assembly (80) comprising in turn:
- a forming plate (90),
- a paper-pressing ring (100) comprising a pair of side walls (102), a front wall (104) and a rear wall (106),
the reinforcement element guide (60) being selectively movable with respect to the walls (49, 50, 51) of the female forming element (48),
**characterised in that** the male mould assembly (80) further comprises an outer bending ring of the reinforcement element (120).

2. Welding mould according to claim 1, **characterized in that** an inner edge surface (69) of the reinforcing element guide (60) is arranged in proximity to an outer wall (124) of an upper portion of the walls (49, 50, 51) of the female forming element (48) during a first operating position of the mould (20) for holding an outer portion (230) of a reinforcing element.

3. Welding mould according to claim 1, **characterized in that** the reinforcing element guide (60) comprises at least one seat (67) inside which a resilient element (45) is arranged.

4. Welding mould according to claim 3, **characterized in that** the female mould assembly (40) comprises a female support plate (12) comprising at least a first seat (13) arranged aligned with the at least one seat (67) of the reinforcing element guide (60), the resilient element (45) being arranged inside said first seat (13).

5. Welding mould according to claim 1, **characterized in that** the upper portions of the walls (49, 50, 51) of the female forming element (48) define at the top an edge which extends seamlessly to form an upper flat surface (126), and the pair of side walls (102), the front wall (104) and the rear wall (106) of the paper-pressing ring (100) define at the bottom an edge that develops seamlessly to form a lower flat surface (226), the paper-pressing ring (100) being selectively movable with respect to the outer edge ring (120), and in such a way that the lower flat surface (226) of the paper-pressing ring (100) rests on the upper flat surface (126) of the female forming element (48) so as to retain a central portion (210) of the reinforcing element during a second operating position of the mould (20).

6. Welding mould according to claim 5, **characterized in that** the male mould (80) comprises a male support plate (14) on which at least one seat (143) is formed, inside which seat a resilient element (105) is arranged.

7. Welding mould according to claim 4, **characterized in that** the upper portions of the walls (49, 50, 51) of the female forming element (48) comprise an internal wall (122) and an external wall (124), both inclined with respect to the plane defined by the upper surface (126).

8. Welding mould according to claim 7, **characterized in that** at least one portion (130) of the edges (92, 94, 96) of the second forming plate (90) is inclined with respect to the bottom wall (93) of the second forming plate (90).

9. Welding mould according to claim 8, **characterized in that** the reinforcing element outer bending ring (120) comprises a projecting inner edge (132) defined by a horizontal wall (134) and a vertical wall (136), at least one portion of said vertical wall 136 comprising an inclined surface (138).

10. Welding mould according to claim 9, **characterized in that** the inclination of the portion (130) of the second forming plate (90) corresponds to the inclination of the inner wall (122) of the walls (49, 50, 51) of the female forming element (48).

11. Welding mould according to claim 10, **characterized in that** the inclination of the inclined surface (138) of the reinforcing element outer bending ring (120) corresponds to the inclination of the outer wall (124) of the walls (49, 50, 51) of the female forming element (48).

12. Welding mould according to claim 4, **characterized in that** the female support plate (12) comprises a base plate (70), a female insulating plate (41) and a female heating plate (42) on which the female forming element (48) is engaged.

13. Welding mould according to any one of the preceding claims, **characterized in that** the male support plate (14) comprises a male heating plate (82), the forming plate (90) being fixed to the male heating plate (82).

## Patentansprüche

1. Schweißform zum Anschweißen eines Verstärkungselements an einen Lebensmittelbehälter, welche umfasst:
- eine weibliche Formanordnung (40), die mindestens ein weibliches Formelement (48) mit einem Paar von Seitenwänden (49), einer Vorderwand (50) und einer Rückwand (51) umfasst,
- eine Verstärkungselementführung (60), die eine oder mehrere Öffnungen (62) aufweist, die durch eine Umfangswand (64) und eine Innenwand (66) begrenzt sind,
worin das mindestens eine weibliche Formelement (48) im Inneren der Öffnung (62) der Verstärkungselementführung (60) angeordnet ist,
- eine männliche Formanordnung (80), die umfasst:
- eine Formplatte (90),
- einen Papierpressring (100), der ein Paar Seitenwände (102), eine Vorderwand (104) und eine Rückwand (106) umfasst,
worin die Verstärkungselementführung (60) in Bezug auf die Wände (49, 50, 51) des weiblichen Formelements (48) selektiv beweglich ist,
**dadurch gekennzeichnet, dass** die männliche Formanordnung (80) zudem einen äußeren Krümmungsring des Verstärkungselements (120) umfasst.

2. Schweißform nach Anspruch 1, **dadurch gekennzeichnet, dass** eine innere Randfläche (69) der Verstärkungselementführung (60) zum Halten eines äußeren Abschnitts (230) eines Verstärkungselements während einer ersten Betriebsposition der Form (20) in der Nähe einer Außenwand (124) eines oberen Abschnitts der Wände (49, 50, 51) des weiblichen Formelements (48) angeordnet ist.

3. Schweißform nach Anspruch 1, **dadurch gekennzeichnet, dass** die Verstärkungselementführung (60) mindestens einen Sitz (67) aufweist, in dem ein federndes Element (45) angeordnet ist.

4. Schweißform nach Anspruch 3, **dadurch gekennzeichnet, dass** die weibliche Formanordnung (40) eine weibliche Trägerplatte (12) umfasst, die mindestens einen ersten Sitz (13) aufweist, der mit dem mindestens einen Sitz (67) der Verstärkungselementführung (60) ausgerichtet ist, worin das elastische Element (45) innerhalb des ersten Sitzes (13) angeordnet ist.

5. Schweißform nach Anspruch 1, **dadurch gekennzeichnet, dass** die oberen Abschnitte der Wände (49, 50, 51) des weiblichen Formelements (48) an der Oberseite eine Kante definieren, die sich nahtlos erstreckt, um eine obere flache Oberfläche (126) auszubilden, und das Paar von Seitenwänden (102), die Vorderwand (104) und die Rückwand (106) des Papierpressrings (100) an der Unterseite eine Kante definieren, die sich nahtlos entwickelt, um eine untere flache Oberfläche (226) auszubilden, und darin, dass der Papierpressring (100) in Bezug auf den äußeren Randring (120) selektiv beweglich ist, und zwar derart, dass die untere flache Oberfläche (226) des Papierpressrings (100) auf der oberen flachen Oberfläche (126) des weiblichen Formelements (48) ruht, um während einer zweiten Betriebsposition der Form (20) einen zentralen Abschnitt (210) des Verstärkungselements zurückzuhalten.

6. Schweißform nach Anspruch 5, **dadurch gekennzeichnet, dass** das männliche Formelement (80) eine männliche Trägerplatte (14) umfasst, auf der mindestens ein Sitz (143) ausgebildet ist, in dem ein elastisches Element (105) angeordnet ist.

7. Schweißform nach Anspruch 4, **dadurch gekennzeichnet, dass** die oberen Abschnitte der Wände (49, 50, 51) des weiblichen Formelements (48) eine Innenwand (122) und eine Außenwand (124) umfassen, die beide in Bezug auf die von der oberen Oberfläche (126) definierte Ebene geneigt sind.

8. Schweißform nach Anspruch 7, **dadurch gekennzeichnet, dass** mindestens ein Teil (130) der Ränder (92, 94, 96) der zweiten Formplatte (90) in Bezug auf die Bodenwand (93) der zweiten Formplatte (90) geneigt ist.

9. Schweißform nach Anspruch 8, **dadurch gekennzeichnet, dass** der äußere Krümmungsring (120) des Verstärkungselements eine hervorstehende Innenkante (132) aufweist, die durch eine horizontale Wand (134) und eine vertikale Wand (136) definiert ist, worin mindestens ein Teil der vertikalen Wand (136) eine geneigte Oberfläche (138) aufweist.

10. Schweißform nach Anspruch 9, **dadurch gekennzeichnet, dass** die Neigung des Teils (130) der zweiten Formplatte (90) der Neigung der Innenwand (122) der Wände (49, 50, 51) des weiblichen Formelements (48) entspricht.

11. Schweißform nach Anspruch 10, **dadurch gekennzeichnet, dass** die Neigung der geneigten Fläche (138) des äußeren Krümmungsrings (120) des Verstärkungselement der Neigung der Außenwand (124) der Wände (49, 50, 51) des weiblichen Formelements (48) entspricht.

12. Schweißform nach Anspruch 4, **dadurch gekennzeichnet, dass** die weibliche Trägerplatte (12) eine Grundplatte (70), eine weibliche Isolierplatte (41) und eine weibliche Heizplatte (42) umfasst, an der das weibliche Formelement (48) anliegt.

13. Schweißform nach einem der vorstehenden Ansprüche, **dadurch gekennzeichnet, dass** die männliche Trägerplatte (14) eine männliche Heizplatte (82) aufweist, worin die Formplatte (90) an der männlichen Heizplatte (82) befestigt ist.

## Revendications

1. Moule de soudage pour souder un élément de renforcement sur un récipient alimentaire, comprenant :
un ensemble de moule femelle (40) comprenant au moins un élément de formage femelle (48) ayant une paire de parois latérales (49), une paroi avant (50) et une paroi arrière (51),
un guide d'élément de renforcement (60), comprenant une ou plusieurs ouvertures (62) délimitées par une paroi périmétrale (64) et une paroi interne (66),
le au moins un élément de formage femelle (48) étant agencé à l'intérieur de ladite ouverture (62) du guide d'élément de renforcement (60),
un ensemble de moule mâle (80) comprenant à son tour :
une plaque de formage (90),
une bague de pression de papier (100) comprenant une paire de parois latérales (102), une paroi avant (104) et une paroi arrière (106),
le guide d'élément de renforcement (60) étant sélectivement mobile par rapport aux parois (49, 50, 51) de l'élément de formage femelle (48),
**caractérisé en ce que** l'ensemble de moule mâle (80) comprend en outre une bague de flexion externe de l'élément de renforcement (120).

2. Moule de soudage selon la revendication 1, **caractérisé en ce qu'**une surface de bord interne (69) du guide d'élément de renforcement (60) est agencée à proximité d'une paroi externe (124) d'une partie supérieure des parois (49, 50, 51) de l'élément de formage femelle (48) pendant une première position de fonctionnement du moule (20) pour maintenir une partie externe (230) d'un élément de renforcement.

3. Moule de soudage selon la revendication 1, **caractérisé en ce que** le guide d'élément de renforcement (60) comprend au moins un siège (67) à l'intérieur duquel est agencé un élément résilient (45).

4. Moule de soudage selon la revendication 3, **caractérisé en ce que** l'ensemble de moule femelle (40) comprend une plaque de support femelle (12) comprenant au moins un premier siège (13) aligné avec le au moins un siège (67) du guide d'élément de renforcement (60), l'élément résilient (45) étant agencé à l'intérieur dudit premier siège (13).

5. Moule de soudage selon la revendication 1, **caractérisé en ce que** les parties supérieures des parois (49, 50, 51) de l'élément de formage femelle (48) définissent, au niveau du sommet, un bord qui s'étend sans soudure pour former une surface plate supérieure (126), et la paire de parois latérales (102), la paroi avant (104) et la paroi arrière (106) de la bague de pression de papier (100) définissent, au fond, un bord qui se développe, sans soudure, pour former une surface plate inférieure (226), la bague de pression de papier (100) étant sélectivement mobile par rapport à la bague de bord externe (120) et de sorte que la surface plate inférieure (226) de la bague de pression de papier (100) repose sur la surface plate supérieure (126) de l'élément de formage femelle (48) afin de retenir une partie centrale (210) de l'élément de renforcement pendant une seconde position de fonctionnement du moule (20).

6. Moule de soudage selon la revendication 5, **caractérisé en ce que** le moule mâle (80) comprend une plaque de support mâle (14) sur laquelle au moins un siège (143) est formé, à l'intérieur duquel est agencé un élément résilient (105).

7. Moule de soudage selon la revendication 4, **caractérisé en ce que** les parties supérieures des parois (49, 50, 51) de l'élément de formage femelle (48) comprennent une paroi interne (122) et une paroi externe (124), les deux inclinées par rapport au plan défini par la surface supérieure (126).

8. Moule de soudage selon la revendication 7, **caractérisé en ce qu'**au moins une partie (130) des bords (92, 94, 96) de la seconde plaque de formage (90) est inclinée par rapport à la paroi inférieure (93) de la seconde plaque de formage (90).

9. Moule de soudage selon la revendication 8, **caractérisé en ce que** la bague de flexion externe (120) de l'élément de renforcement comprend un bord interne en saillie (132) défini par une paroi horizontale (134) et une paroi verticale (136), au moins une partie de ladite paroi verticale (136) comprenant une surface inclinée (138).

10. Moule de soudage selon la revendication 9, **caractérisé en ce que** l'inclinaison de la partie (130) de la seconde plaque de formage (90) correspond à l'inclinaison de la paroi interne (122) des parois (49, 50, 51) de l'élément de formage femelle (48).

11. Moule de soudage selon la revendication 10, **caractérisé en ce que** l'inclinaison de la surface inclinée (138) de la bague de flexion externe (120) de l'élément de renforcement correspond à l'inclinaison de la paroi externe (124) des parois (49, 50, 51) de l'élément de formage femelle (48).

12. Moule de soudage selon la revendication 4, **caractérisé en ce que** la plaque de support femelle (12) comprend une plaque de base (70), une plaque d'isolation femelle (41) et une plaque de chauffage femelle (42) sur laquelle est mis en prise l'élément de formage femelle (48).

13. Moule de soudage selon l'une quelconque des revendications précédentes, **caractérisé en ce que** la plaque de support mâle (14) comprend une plaque de chauffage mâle (82), la plaque de formage (90) étant fixée à la plaque de chauffage mâle (82).
